# EUROPEAN PATENT APPLICATION

(11) **EP 3 205 559 A1**
(43) Date of publication of application: **16.08.2017**
(21) Application number: 16206912.4
(22) Date of filing: 27.12.2016
(51) Int. Cl.: B62D 5/04, B62D 5/00

(54) **STEERING DEVICE**

(30) Priority: 09.02.2016 JP 2016022820
(71) Applicant: Kabushiki Kaisha Tokai Rika Denki Seisakusho, Ohguchi-cho Niwa-gun Aichi 480-0195 (JP)
(72) Inventor: URUSHIBATA, Takanori, Niwa-gun,, Aichi 480-0195 (JP)
(74) Representative: TBK

(57) **Abstract**

A steering device (1) includes a steering shaft (2), a rotation member (60) to which rotation of the steering shaft (2) is transmitted, an elastic member (70) that is elastically deformed when the rotation member (60) rotates, and a reduction device (6) located between the steering shaft (2) and the rotation member (60). The reduction device (6) reduces rotation of the steering shaft (2) in speed and transmits the rotation to the rotation member (60).

## Description

The present disclosure relates to a steering device.

In Japanese Laid-Open Patent Publication No. 2014-41469, the inventor of the present application proposed a steering device that generates a rotation resistance force (also referred to as reaction force) when the driver performs a steering operation and feeds back the generated rotation resistance force to the driver. The steering device includes a torsion spring, which is loosely wound around a steering shaft, and a rotation projection, which rotates integrally with the steering shaft. When the steering shaft is rotated in the clockwise direction, the rotation projection presses a first end of the torsion spring to twist the torsion spring and move the first end away from a second end of the torsion spring in the clockwise direction. When the steering shaft is rotated in the counterclockwise direction, the rotation projection presses the second end of the torsion spring to twist the torsion spring and move the second end away from the first end of the torsion spring in the counterclockwise direction. The resilience of the torsion spring is applied to the steering shaft as a rotation resistance force that counters the steering operation.

In the steering device of JP'469, when the steering shaft is rotated by 360 degrees in the clockwise direction or the counterclockwise direction, the end of the torsion spring pressed by the rotation projection interferes with the other end of the torsion spring or the rotation projection engages both of the two ends of the torsion spring. Thus, the steering shaft cannot be rotated beyond 360 degrees.

It is an object of the present disclosure to increase the rotatable angle of the steering shaft.

One aspect of the present disclosure is a steering device that includes a steering shaft, a rotation member to which rotation of the steering shaft is transmitted, an elastic member that is elastically deformed when the rotation member rotates, and a reduction device located between the steering shaft and the rotation member. The reduction device reduces rotation of the steering shaft in speed and transmits the rotation to the rotation member.

In the steering device of this aspect, the reduction device reduces the speed of rotation of the steering shaft and transmits the rotation to the rotation member. The rotation angle of the rotation member is smaller than the rotation angle of the steering shaft. For example, when the rotation member rotates by 360 degrees, the steering shaft rotates by more than 360 degrees. Thus, in the steering device, when the steering shaft is rotated, the elastic member is elastically deformed and generates a rotation resistance force. Also, the rotatable angle of the steering shaft is increased as compared to a prior art device.

In another aspect of the steering device according to the present disclosure, the reduction device includes a planetary gear train. The planetary gear train includes a sun gear, which is coaxial with the steering shaft and rotated integrally with the steering shaft, a planetary gear set, which engages the sun gear, and a ring gear, which engages the planetary gear set. The rotation member rotates about the steering shaft in cooperation with the planetary gear set. In the steering device of this aspect, the rotation member rotates about the steering shaft. For example, the steering shaft and the rotation member may have the same rotation axis. This miniaturizes the steering device as a whole. Particularly, the dimension of the steering device is decreased in the axial direction of the steering shaft.

In another aspect of the steering device according to the present disclosure, the planetary gear set includes a plurality of planetary gears, which are arranged around the sun gear at equal angular intervals. The steering device further includes a planetary carrier that includes insertion portions respectively inserted into the planetary gears. The planetary carrier transmits rotation of the planetary gears about the sun gear to the rotation member.

In the steering device of this aspect, when the rotation member is rotated, the elastic force received by the rotation member from the elastic member is transmitted to the planetary gears through the planetary carrier. Since the planetary gears are arranged at the equal angular intervals, the elastic force is evenly transmitted to the planetary gears. This limits axial misalignment of the sun gear and the ring gear even when the four planetary gears receive the elastic force.

In another aspect of the steering device according to the present disclosure, the reduction device includes a first gear, which is coaxial with the steering shaft and rotated integrally with the steering shaft, and a second gear, which is engaged with the first gear and rotated about a reduction rotation shaft that differs from the steering shaft. The rotation member rotates about the reduction rotation shaft in cooperation with the second gear. The steering device of this aspect increases the degree of freedom for coupling the rotation member and the elastic member to the steering shaft. When a steer-by-wire type vehicle has this structure, the steering shaft differs from the reduction rotation shaft. This increases the degree of freedom for installing a rotation angle detector that detects the rotation angle of the steering shaft.

The steering device of any of the above aspects according to the present disclosure has the advantage that increases the rotatable angle of the steering shaft.

Other aspects and advantages of the embodiments will become apparent from the following description, taken in conjunction with the accompanying drawings, illustrating by way of example the principles of the invention.
Fig. 1 is an exploded perspective view showing one embodiment of a steering device.
Fig. 2 is a perspective view showing the steering device of Fig. 1.
Fig. 3A is a front view of a planetary gear train.
Fig. 3B is a front view showing the planetary gear train of Fig. 3A when the steering shaft is rotated by 360 degrees in the clockwise direction.
Fig. 4 is an exploded perspective view showing another example of a steering device.
Fig. 5 is a perspective view showing the steering device of Fig. 4.
One embodiment of a steering device will now be described.

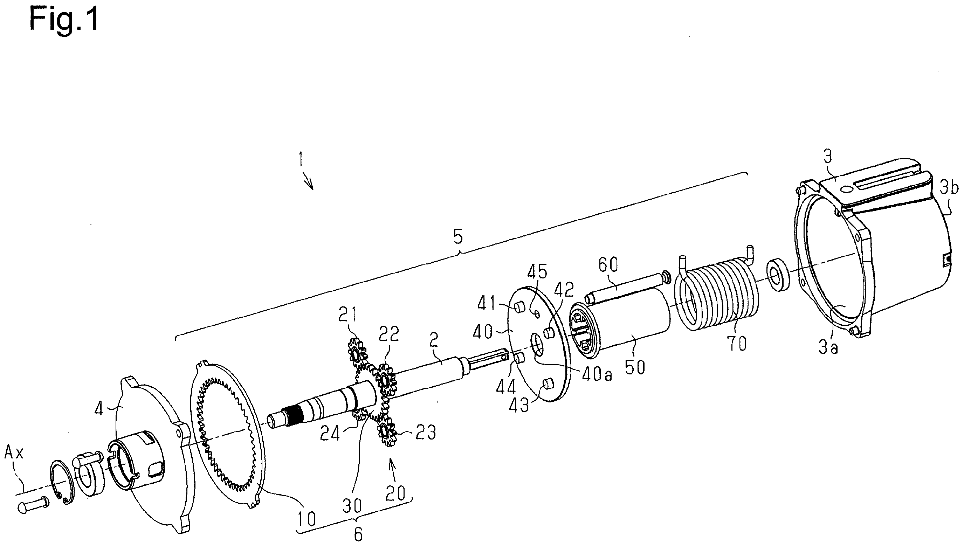

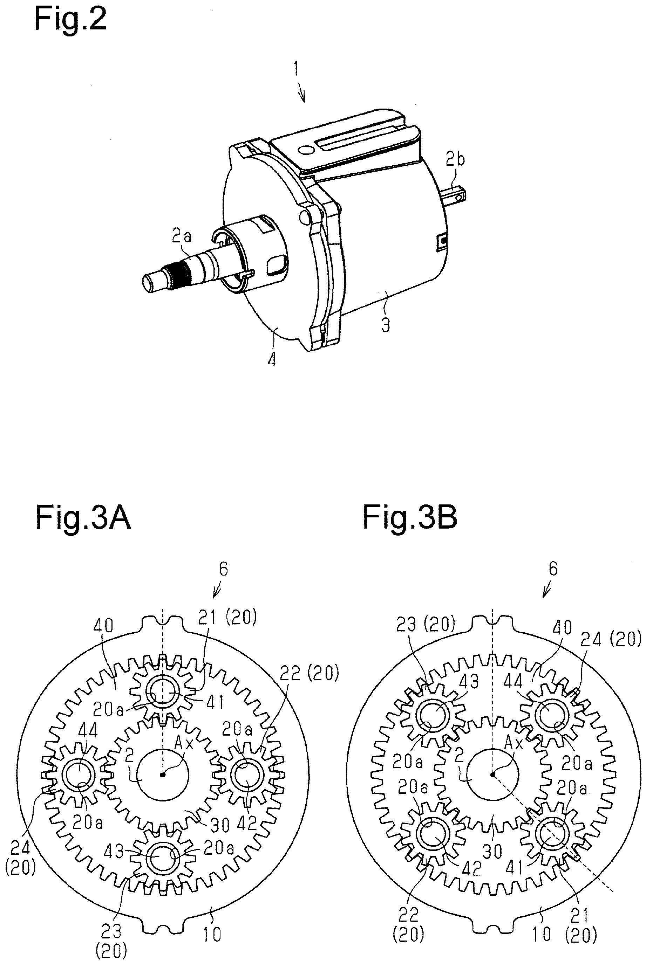

As shown in Figs. 1 and 2, a steering device 1 includes a steering shaft 2, a case 3, and a lid 4. The steering shaft 2 is supported by the case 3 and the lid 4 to be rotational relative to the case 3 and the lid 4. The case 3 includes a tubular receptacle 3a. The lid 4 is coupled to the case 3 to close the receptacle 3a. Although not intended to be restrictive, the receptacle 3a of the case 3 includes a closed end 3b at a side opposite to the lid 4.

Although not intended to be restrictive, the steering device 1 may be installed, for example, in a steer-by-wire type vehicle. As shown in Fig. 2, the steering shaft 2 includes a distal end 2a, which may be exposed out of the steering device 1. The distal end 2a of the steering shaft 2 may be exposed to the passenger compartment of the vehicle and connected to a steering wheel. The steering shaft 2 includes a basal end 2b, which may or may not be exposed from the steering device 1.

The steering device 1 may include a rotation resistance force generator 5. When the steering shaft 2 rotates about a rotation axis Ax, which conforms to a shaft axis of the steering shaft 2, in a first direction, which is one of the clockwise direction and the counterclockwise direction, the rotation resistance force generator 5 is configured to generate an urging force (rotation resistance force) that rotates the steering shaft 2 in a second direction, which is opposite to the first direction. The rotation resistance force generator 5 is partially or entirely accommodated in the receptacle 3a of the case 3 and, for example, held between the closed end 3b and the lid 4. As shown in Fig. 1, the rotation resistance force generator 5 includes a ring gear 10, a planetary gear set 20, a sun gear 30, a planetary carrier 40, a spacer 50, spring twister 60, and a torsion spring 70.

The ring gear 10 includes an annular ring, the inner circumferential surface of which has gear teeth. The number of gear teeth on the ring gear 10 may be referred to as a tooth count Z3. When the lid 4 is coupled to the case 3, the ring gear 10 is fixed to the case 3 with the steering shaft 2 inserted through the ring gear 10. Thus, the ring gear 10 does not rotate relative to the case 3.

The planetary gear set 20 refers to a plurality of planetary gears, for example, four planetary gears 21, 22, 23, 24. The outer diameter of each of the planetary gears 21 to 24 is smaller than the inner diameter of the ring gear 10. Each of the planetary gears 21 to 24 includes an outer circumferential surface on which gear teeth are formed. In the description hereafter, the number of gear teeth on each planetary gear may be referred to as a tooth count Z2. Each of the planetary gears 21 to 24 includes a central portion having a through hole 20a, which extends parallel to the steering shaft 2. The planetary gears 21 to 24 engage with the ring gear 10 so that the planetary gears 21 to 24 are arranged around the steering shaft 2 (rotation axis Ax) at equal angular intervals and not in contact with one another.

The sun gear 30 is a disc, the outer diameter of which is larger than the outer diameter of the steering shaft 2. The sun gear 30 includes an outer circumferential surface on which gear teeth are formed. The number of gear teeth on the sun gear 30 may be referred to as a tooth count Z1. The sun gear 30 includes a central hole that is coaxial with the steering shaft 2. The steering shaft 2 is fitted into the central hole of the sun gear 30. The sun gear 30 engages the planetary gears 21 to 24. The ring gear 10 and the planetary gear set 20 form a planetary gear train 6. The planetary gear train 6 may further include the sun gear 30. A preferred example of a reduction device includes the ring gear 10, the planetary gear set 20, and further, the sun gear 30.

The planetary carrier 40 may be a disc, the outer diameter of which is slightly smaller than the inner diameter of the case 3. The planetary carrier 40 includes a central portion having a through hole 40a, which is slightly larger than the outer diameter of the steering shaft 2. The planetary carrier 40 includes four rod-shaped pins 41, 42, 43, 44, which are arranged around the through hole 40a at equal angular intervals. The rod-shaped pins 41, 42, 43, 44 extend parallel to the rotation axis Ax. The rod-shaped pins 41 to 44 have an identical shape. The outer diameter of each rod-shaped pin is slightly smaller than the diameter of the through holes 20a in the planetary gears 21 to 24. When the steering shaft 2 is inserted through the through hole 40a and the rod-shaped pins 41 to 44 are inserted into the through holes 20a of the corresponding planetary gears 21 to 24, the planetary carrier 40 is located closer to the closed end 3b of the case 3 than the planetary gear train 6. The rod-shaped pins 41 to 44 each correspond to an insertion portion. The planetary carrier 40 includes a fitting hole 45, which is located at an intermediate position between the rod-shaped pin 41 and the rod-shaped pin 42 when viewed from the rotation axis Ax.

The spacer 50 may be a tube having an inner diameter, which is larger than the outer diameter of the steering shaft 2, and an outer diameter, which is smaller than the outer diameter of the planetary carrier 40. The spacer 50 may be coaxial with the steering shaft 2. When the spacer 50 is fitted onto the steering shaft 2, the spacer 50 is located closer to the closed end 3b than the planetary carrier 40.

The spring twister 60 may be a rod that has substantially the same axial length as the spacer 50 and/or the torsion spring 80. The spring twister 60 is fitted or pressed into the fitting hole 45 of the planetary carrier 40. The spring twister 60 rotates integrally with the planetary carrier 40, that is, rotates with the planetary carrier 40 by the same rotation angle.

The torsion spring 70 has an inner diameter, which is slightly larger than the outer diameter of the spacer 50, and an outer diameter, which is smaller than the inner diameter of the case 3. The torsion spring 70is fitted onto the spacer 50 or loosely wound around the spacer 50. The torsion spring 70 is formed, for example, by a metal wire. The torsion spring 70 may include two ends and a coil, which is located between the two ends. The two ends of the torsion spring 70 outwardly project from the coil in a radial direction. The two ends of the torsion spring 70 may be formed by bending the metal wire.

When the steering shaft 2 is rotated in the clockwise direction, the spring twister 60 presses a first end of the torsion spring 70 to twist the torsion spring 70 so that the first end is separated away from a second end of the torsion spring 70 in the clockwise direction. The second end of the torsion spring 70 is, for example, in contact with a stationary spring stopper projection located in the receptacle 3a. When the steering shaft 2 is rotated in the counterclockwise direction, the spring twister 60 presses the second end of the torsion spring 70 to twist the torsion spring 70 so that the second end is separated away from the first end, which is in contact with the stationary spring stopper projection, of the torsion spring 70 in the counterclockwise direction. When the spring twister 60 rotates about the rotation axis Ax, the spring twister 60 comes into contact with the torsion spring 70. When the spring twister 60 rotates about the rotation axis Ax, that is, moves along a circular orbit, the center of which is the rotation axis Ax, against the elastic force of the torsion spring 70, the torsion spring 70 elastically deforms. The spring twister 60 corresponds to a rotation member or a spring pusher. The torsion spring 70 corresponds to an elastic member.

The operation and effects of the steering device 1 will now be described. Here, a case in which the steering shaft 2 is rotated by 360 degrees in the right direction will be described.

As shown in Figs. 3A and 3B, when a steering wheel (not shown) is operated to rotate the steering shaft 2 about the rotation axis Ax, the sun gear 30, which is fitted and fixed to the steering shaft 2, rotates integrally with the steering shaft 2 about the rotation axis Ax, that is, rotates with the steering shaft 2 by the same rotation angle. The sun gear 30 engages each of the planetary gears 21 to 24. Since the planetary gears 21 to 24 engage with the ring gear 10, which is fixed to the case 3, the speed of rotation of the sun gear 30 is reduced and the rotation is transmitted to the planetary carrier 40. For example, when the ratio of the tooth count Z1 of the sun gear 30, the tooth count Z2 of each of the planetary gears 21 to 24, and the tooth count Z3 of the ring gear 10 is Z1:Z2:Z3=16:8:32, the gear ratio of the sun gear 30 to the planetary carrier 40 is three (i.e., Z1:1+(Z3/Z1)=1:3). In this case, when the sun gear 30 rotates about the rotation axis Ax by 360 degrees in the right direction, the planetary carrier 40 rotates about the rotation axis Ax just by 120 degrees in the right direction.

The rod-shaped pins 41 to 44 of the planetary carrier 40 are inserted into the corresponding through holes 20a, which are located in the center portions of the planetary gears 21 to 24. Thus, the planetary carrier 40 rotates integrally with the planetary gears 21 to 24 about rotation axis Ax in the right direction.

The spring twister 60 is fitted or pressed into the fitting hole 45 of the planetary carrier 40. Thus, the spring twister 60 rotates integrally with the planetary carrier 40, that is, rotates with the planetary carrier 40 by the same rotation angle. The rotation of the spring twister 60 about the rotation axis Ax elastically deforms the torsion spring 70.

More specifically, the planetary gear train 6 and the planetary carrier 40 reduce the speed of rotation of the steering shaft 2 about the rotation axis Ax and transmit the rotation to the spring twister 60. Thus, when the steering shaft 2 is rotated, the rotation resistance force is obtained as a result of the elastic deformation of the torsion spring 70 in the same manner as the prior art. Also, the rotatable angle of the steering shaft 2 is increased as compared to the prior art device.

Additionally, the planetary gear train 6 aligns the rotation axis Ax of the steering shaft 2 with the rotation axis of the spring twister 60. This miniaturizes the steering device 1 as a whole. Particularly, the dimension of the steering device 1 is decreased in the axial direction of the steering shaft 2.

Further, the four planetary gears 21 to 24 are arranged in the planetary gear train 6 at the equal angular intervals. Thus, the elastic force of the torsion spring 70 is evenly transmitted to the four planetary gears 21 to 24. This limits the axial misalignment of the sun gear 30 and the ring gear 10 even when the four planetary gears 21 to 24 receive the elastic force.

The above embodiment may be modified as follows.

In the above embodiment, the planetary gear train 6 is described as a preferred example of a reduction device. Instead, the steering device may include a reduction device that differs from the planetary gear train 6.

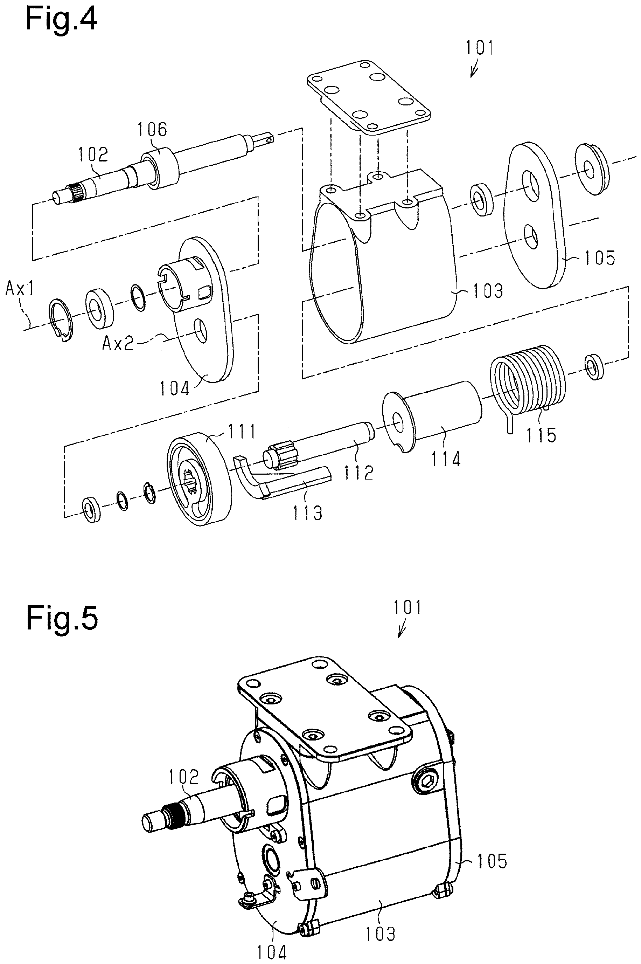

Figs. 4 and 5 show a modified example of a steering device 101 including a reduction device that includes a first gear 106, a second gear 111, and a reduction rotation shaft 112. The steering device 101 may further include a steering shaft 102, a case 103, lids 104, 105, a spring twister 113, a spacer 114, and a torsion spring 115.

The steering shaft 102 and the reduction rotation shaft 112 are arranged parallel to each other. The steering shaft 102 and the reduction rotation shaft 112 have rotation axes Ax1, Ax2, respectively. The rotation axes Ax1, Ax2 extend parallel to each other and are radially separated from each other. The steering shaft 102 and the reduction rotation shaft 112 are rotationally supported by the lids 104, 105, which close two opposing open ends of the case 103.

When the steering shaft 102 is inserted through a central portion of the first gear 106, the first gear 106 is fixed to the steering shaft 102. The first gear 106 rotates about the rotation axis Ax1 in cooperation with the steering shaft 102.

The second gear 111 has more teeth than the first gear 106. When the reduction rotation shaft 112 is inserted through a central portion of the second gear 111, the second gear 111 is fixed to the reduction rotation shaft 112 and engages the first gear 106. The second gear 111 rotates about the rotation axis Ax2 in cooperation with the first gear 106.

The spring twister 113 is fixed to the second gear 111 and rotated about the reduction rotation shaft 112 (rotation axis Ax2). The spring twister 113 corresponds to a rotation member or a spring pusher.

The torsion spring 115 is fitted onto the spacer 114, which is fitted onto the reduction rotation shaft 112. When the spring twister 113 rotates about the reduction rotation shaft 112 (rotation axis Ax2), the torsion spring 115 comes into contact with the spring twister 113. The rotation of the spring twister 113 against the elastic force of the torsion spring 115 elastically deforms the torsion spring 115. The torsion spring 115 corresponds to an elastic member.

Even in this structure, the first gear 106 and the second gear 111 reduce the speed of rotation of the steering shaft 2 about the rotation axis Ax1 and transmit the rotation to the spring twister 113, which rotates about the rotation axis Ax2. Thus, when the steering shaft 2 is rotated, the rotation resistance force is obtained as a result of the elastic deformation of the torsion spring 115 in the same as the prior art. Also, the rotatable angle of the steering shaft 2 is increased as compared to the prior art device.

Additionally, the above structure increases the degree of freedom for coupling the spring twister 113 and the torsion spring 115 to the steering shaft 2. When a steer-by-wire type vehicle has this structure, the vehicle includes two separate rotation shafts of the steering shaft 102 and the reduction rotation shaft 112. This also increases the degree of freedom for installing a rotation angle detector that detects the rotation angle of the steering shaft 102.

In the above embodiment, the number of planetary gears may be changed. Additionally, the planetary gears do not have to be arranged at the equal angular intervals.

In the above embodiment, when one planetary gear is used, the spring twister 60 may be directly coupled to the planetary gear. In this case, the planetary carrier may be omitted.

In the above embodiment, the planetary carrier 40 is not limited to a disc. The shape of the planetary carrier 40 may be modified as long as the shape allows for rotation of the planetary carrier 40 and transmits the rotation of the planetary carrier 40 to the spring twister 60.

In the above embodiment, the planetary carrier 40 may be integrated with the spring twister 60. The planetary carrier 40 may be integrated with the spacer 50. The planetary carrier 40, the spacer 50, and the spring twister 60 may be integrated with one another.

The steering shaft 102 and the reduction rotation shaft 112 may be arranged non-parallel to each other and, for example, in skew positions.

In the above embodiment and modified examples, the spacer 50 may be omitted as long as the spring is held.

The steering device of each of the above embodiment and modified examples may be installed in an actual vehicle. Additionally, the steering device may be installed or connected to a computer device such as a vehicle driving simulation game, which shows graphic images that simulate driving of a vehicle on a display.

The preset disclosure includes implementations described below. Reference characters are added to facilitate understanding of the relationship between the above embodiment and the implementations.

[Implementation 1] A steering device (1; 101) including: a steering shaft (2; 102) having a shaft axis (Ax; Ax1); a gear train (6; 106, 111) having a reduction gear ratio, wherein the gear train (6) includes a first gear (30; 106), which is coupled and fixed to the steering shaft (2; 102) and rotated with the steering shaft (2; 102) by the same rotation angle, and a second gear (21; 111), which directly or indirectly engages the first gear (30; 106); a spring pusher (60; 113) indirectly connected to the steering shaft (2; 102) by at least the gear train (6; 106, 111), wherein when the steering shaft (2; 102) is rotated by a first rotation angle, the spring pusher (60; 113) is moved by a second rotation angle, which is smaller than the first rotation angle, along a circular orbit, the center of which is a rotation axis (Ax; Ax2) that conforms to the shaft axis (Ax; Ax1) or extends parallel to the shaft axis; and a spring (70; 115) pressed by the spring pusher(60; 113), wherein when the steering shaft(2; 102) rotates about the shaft axis (Ax) by the first rotation angle in a first direction, which is one of a clockwise direction and a counterclockwise direction, the spring pusher (60; 113) presses the spring (70; 115) so that the spring (70; 115) generates an urging force that is proportional to the first rotation angle, wherein the urging force rotates the steering shaft (2; 102) in a second direction that is opposite to the first direction.
[Implementation 2] The steering device (1) according to implementation 1, wherein the gear train (6) includes a planetary gear train (6) that is coaxial with the shaft axis (Ax).
[Implementation 3] The steering device (1) according to implementation 2, wherein the spring (70) is coaxial with the shaft axis (Ax) and the planetary gear train (6).
[Implementation 4] The steering device (1) according to implementation 2 or 3, wherein the spring pusher (60) moves along a circular orbit, the center of which is the shaft axis (Ax).
[Implementation 5] The steering device (101) according to implementation 1, wherein the second gear (111) of the gear train (106, 111) is coaxially coupled to a reduction rotation shaft (112), and the reduction rotation shaft (112) is not aligned with the shaft axis (Ax1).
[Implementation 6] The steering device (101) according to implementation 5, wherein the spring (115) is coaxial with the reduction rotation shaft (112), and the reduction rotation shaft (112) is parallel to the shaft axis (Ax1).
[Implementation 7] The steering device (101) according to implementation 5 or 6, wherein the spring pusher (113) moves along a circular orbit, the center of which is the reduction rotation shaft (112), and the reduction rotation shaft (112) extends parallel to the shaft axis (Ax1).
[Implementation 8] The steering device (1; 101) according to any one of implementations 1 to 7, wherein the spring (70; 115) includes a torsion spring.

It should be apparent to those skilled in the art that the present invention may be embodied in many other specific forms without departing from the scope of the invention. For example, one or more of the components may be omitted from the components described in the embodiments (or one or more aspects thereof). Further, components in different embodiments may be appropriately combined.

A steering device (1) includes a steering shaft (2), a rotation member (60) to which rotation of the steering shaft (2) is transmitted, an elastic member (70) that is elastically deformed when the rotation member (60) rotates, and a reduction device (6) located between the steering shaft (2) and the rotation member (60). The reduction device (6) reduces rotation of the steering shaft (2) in speed and transmits the rotation to the rotation member (60).

## Claims

1. A steering device (1; 101) comprising:
a steering shaft (2; 102);
a rotation member (60; 113) to which rotation of the steering shaft (2; 102) is transmitted;
an elastic member (70; 115) that is elastically deformed when the rotation member (60; 113) rotates; and
a reduction device (6; 106, 111) located between the steering shaft (2; 102) and the rotation member (60; 113) to reduce rotation of the steering shaft (2; 102) in speed and to transmit the rotation to the rotation member (60; 113).

2. The steering device (1) according to claim 1, wherein
the reduction device (6) includes a planetary gear train (6), wherein the planetary gear train includes a sun gear (30), which is coaxial with the steering shaft (2) and rotated integrally with the steering shaft (2), a planetary gear set (20), which engages the sun gear (30), and a ring gear (10), which engages the planetary gear set (20), and
the rotation member (60) rotates about the steering shaft (2) in cooperation with the planetary gear set (20).

3. The steering device (1) according to claim 2, wherein
the planetary gear set (20) includes a plurality of planetary gears (21, 22, 23, 24), which are arranged around the sun gear at equal angular intervals, and
the steering device (1) further comprises a planetary carrier (40) that includes insertion portions (41, 42, 43, 44) respectively inserted into the planetary gears (21, 22, 23, 24), and the planetary carrier (40) transmits rotation of the planetary gears (21, 22, 23, 24) about the sun gear (30) to the rotation member (60).

4. The steering device (101) according to claim 1, wherein
the reduction device (106, 111) includes
a first gear (106), which is coaxial with the steering shaft (102) and rotated integrally with the steering shaft (102), and
a second gear (111), which is engaged with the first gear (106) and rotated about a reduction rotation shaft (112) that differs from the steering shaft (102), and
the rotation member (113) rotates about the reduction rotation shaft (112) in cooperation with the second gear (111).
